# EUROPEAN PATENT SPECIFICATION

(11) **EP 3 315 330 B1**
(45) Date of publication and mention of the grant of the patent: **26.05.2021**
(21) Application number: 16817552.9
(22) Date of filing: 27.04.2016
(51) Int. Cl.: B60C 23/04, G01L 17/00, H04B 1/401

(54) **TIRE CONDITION DETECTION DEVICE**
VORRICHTUNG ZUR ERKENNUNG EINES REIFENZUSTANDES
DISPOSITIF DE DÉTECTION DE CONDITION DE PNEU

(30) Priority: 29.06.2015 JP 2015129991
(43) Date of publication of application: 02.05.2018
(73) Proprietor: Pacific Industrial Co., Ltd., Ogaki-shi, Gifu 503-8603 (JP)
(72) Inventor: OKUMURA, Koji, Ogaki-shi Gifu 503-8603 (JP); FUJII, Keiyu, Ogaki-shi Gifu 503-8603 (JP)
(74) Representative: Daub, Thomas
(86) International application number: PCT/JP2016/063210
(87) International publication number: WO 2017/002442

(56) References cited:
- WO-A1-2005/123422
- WO-A1-2005/123422
- WO-A2-02/07993
- JP-A- 2002 218 020
- JP-A- 2002 218 020
- JP-A- 2003 248 890
- JP-A- 2003 248 890
- JP-A- 2003 517 231
- JP-A- 2004 314 726
- JP-A- 2004 314 726
- JP-A- 2014 091 344

## Description

### TECHNICAL FIELD

The present invention relates to a tire condition detection device.

### BACKGROUND ART

Patent Document 1 discloses one example of a tire condition monitoring apparatus installed in a vehicle equipped with wheel assemblies. The tire condition monitoring apparatus of Patent Document 1 includes a receiver and tire condition detection devices, which are respectively installed in the wheel assemblies. Each tire condition detection device includes a condition detecting section that detects the condition of the tire and a transmitting section that transmits information indicating the condition of the tire detected by the condition detecting section to the receiver. The transmitting section is driven by the battery of the tire condition detection device. The receiver receives the information transmitted from the tire condition detection devices in the wheel assemblies and monitors the condition of each tire.

### PRIOR ART DOCUMENT

### Patent Document

Patent Document 1: Japanese Laid-Open Patent Publication No. 2014-91344

Patent Document 2 : WO 02/07993 A2 relates as prior art to a tire condition detection device configured to be installed in a tire of each wheel assembly of a vehicle. The device comprising: a condition detecting section configured to detect a condition of the tire; a transmitting section configured to wirelessly transmit information detected by the condition detecting section; a receiving section configured to be capable of receiving information wirelessly transmitted from an external device; a control section configured to control the transmitting section and the receiving section, wherein the control section is further configured to be capable of switching a state of the tire condition detection device between a responsive state (awake) and a non-responsive state (sleep).

### SUMMARY OF THE INVENTION

### Problems that the Invention is to Solve

A tire condition detection device has not only a condition detection (measurement) function of obtaining the condition inside the tire and a function of transmitting the detected information to the receiver, but also a reception function of determining the timing of measurement and transmission from the outside. The reception function of a tire condition detection device is used, for example, when inspecting whether the tire condition detection device is operating properly at a factory or a dealer, when checking whether the tire air pressure is adequate at a factory or a dealer, and when registering the ID of the tire condition detection device attached to the vehicle to the receiver. Other than these cases, the reception function can be used for wireless writing to update the software of the tire condition detection device.

Therefore, transmission to the tire condition detection device from the outside is performed only in the above-described inspection, software update, and ID registration. The situations in which the reception function is used are thus limited. The receiving section, which exhibits the reception function of the tire condition detection device, is always maintained in the standby state so as to be able to receive signals in the limited situations. Thus, the tire condition detection device requires power to maintain the receiving section in the standby state for reception from external devices. This shortens the life of the battery.

Accordingly, it is an objective of the present invention to provide a tire condition detection device capable of extending the battery life.

### Means for Solving the Problems

To achieve the foregoing objective, a tire condition detection device is provided that is configured to be installed in a tire of each wheel assembly of a vehicle. The device includes a condition detecting section configured to detect a condition of the tire, a transmitting section configured to wirelessly transmit information detected by the condition detecting section, a receiving section configured to be capable of receiving information wirelessly transmitted from an external device, a control section configured to control the transmitting section and the receiving section, and a battery, which is a power source for the tire condition detection device. The control section is configured to be capable of switching a state of the tire condition detection device between a responsive state and a non-responsive state. In the responsive state, the receiving section is maintained in a standby state, in which the receiving section is capable of receiving the information wirelessly transmitted from the external device. The control section performs a reception response when the information is received. In the non-responsive state, the receiving section does not receive the information.

With this configuration, the tire condition detection device does not receive wireless signals in the non-responsive state. Therefore, since the reception response is not performed in the non-responsive state, the power consumed for the reception response and the power consumed for receiving wireless transmission are reduced as compared with that in the responsive state. Since the tire condition detection device can be switched between the responsive state and the non-responsive state, the power consumption is reduced and the battery life is extended as compared with the case in which the tire condition detection device is always maintained in the responsive state.

To achieve the foregoing objective, a tire condition detection device is provided that is configured to be installed in a tire of each wheel assembly of a vehicle. The device includes a condition detecting section configured to detect a condition of the tire, a transmitting section configured to wirelessly transmit information detected by the condition detecting section, a receiving section configured to be capable of receiving information wirelessly transmitted from an external device, a control section configured to control the transmitting section and the receiving section, and a battery, which is a power source for the tire condition detection device. The control section is configured to be capable of switching a state of the tire condition detection device between a responsive state and a non-responsive state. In the responsive state, the receiving section is maintained in a standby state, in which the receiving section is capable of receiving the information wirelessly transmitted from the external device. The control section performs a reception response when the information is received. In the non-responsive state, the reception response is harder to perform than in the responsive state regardless of whether the receiving section is maintained in the standby state.

With this configuration, since the reception response is less likely to be performed in the non-responsive state than in the responsive state, the power consumed for the reception response and the power consumed for receiving wireless transmission are reduced as compared with that in the responsive state. Since the tire condition detection device can be switched between the responsive state and the non-responsive state, the power consumption is reduced and the battery life is extended as compared with the case in which the tire condition detection device is always maintained in the responsive state.

The above-described tire condition detection devices may be configured such that, when the receiving section has received the same information from the external device multiple times or when the receiving section has continually received the information from the external device, the control section switches the state of the tire condition detection device from the responsive state to the non-responsive state.

If the receiving section is maintained in the standby state, the receiving section may erroneously receive, for example, the wireless power outputted by the charging facility for charging electric vehicles or wireless information for detecting vehicles outputted in parking lots. In this case, since the vehicle may be stopped in the charging facility or the parking lot, the tire condition detection device may continue performing the erroneous reception and the accompanying operations (for example, transmission) during the stopped state of the vehicle. This may cause the tire condition detection device to consume significantly more power than it would maintain the standby state of the receiving section.

When receiving information from an external device while being in the responsive state, the tire condition detection device performs a reception response (for example, responsive transmission). At this time, if the external device that has transmitted the information is an external device designed to transmit information to the tire condition detection device (an intended external device), the external device stops transmitting information when it receives the responsive transmission of the tire condition detection device or when a predetermined time has elapsed, so that the external device will semipermanently refrain from providing a response command to the tire condition detection device. In contrast, if the external device that has transmitted the information is an unintended external device, the external device continues wireless transmission regardless of a response of the tire condition detection device. Therefore, when the same information is received from an external device multiple time or when information from an external device is received continually, it can be determined that the information is being transmitted from an unintended external device. In such a case, regardless of whether the standby state of the receiving section is maintained, a reception response is made harder to perform as compared with the responsive state. As a result, the power consumption is reduced as compared with a case in which a reception response is continually performed while receiving information from the unintended external device. This extends the life of the battery.

The above-described tire condition detection devices may be configured such that the condition detecting section includes a sensor that detects traveling/stopping of the vehicle, and the control section is configured to switch the state of the tire condition detection device from the non-responsive state to the responsive state when traveling of the vehicle is detected.

With this configuration, in a case in which the state of the tire condition detection device is switched from the responsive state to the non-responsive state at an erroneous reception of information from an unintended external device, if it is detected that it is no longer the state of continual erroneous reception of external signals, that is, if traveling of the vehicle is detected, the state of the tire condition detection device is returned to the responsive state. The inclusion of such control allows the tire condition detection device to be switched to the responsive state in response to traveling of the vehicle. Thus, the tire condition can be checked with an external device at a dealer or the like.

The above-described tire condition detection devices may be configured such that the condition detecting section includes a pressure sensor that detects an air pressure of the tire, and the control section switches the state of the tire condition detection device from the non-responsive state to the responsive state when the air pressure detected by the pressure sensor has changed by an amount greater than a change threshold or when the air pressure detected by the pressure sensor becomes lower than or equal to a low-pressure threshold.

This configuration is designed to be used in an inspection at a dealer. Specifically, when the tire condition detection device detects a change in the tire air pressure or a low pressure, in other words, when the operator removes the tire air pressure from the valve, the state of the tire condition detection device is switched from the non-responsive state to the responsive state.

To achieve the foregoing objective, a tire condition detection device is provided that is configured to be installed in a tire of each wheel assembly of a vehicle. The device includes a condition detecting section configured to detect a condition of the tire, a transmitting section configured to wirelessly transmit information detected by the condition detecting section, a receiving section configured to be capable of receiving information wirelessly transmitted from an external device, a control section configured to control the transmitting section and the receiving section, and a battery, which is a power source for the tire condition detection device. The control section is configured switch a state of the tire condition detection device between a bidirectional communication state and a unidirectional communication state. In the bidirectional communication state, the transmitting section is caused to perform wireless transmission, and the receiving section is maintained in a standby state, in which the receiving section is capable of receiving the information wirelessly transmitted from the external device. In the unidirectional communication state, the standby state of the receiving section is maintained less frequently than in the bidirectional communication state, and consequently transmission is performed unilaterally.

With this configuration, the standby state of the receiving section is maintained less frequently in the unidirectional communication state than in the bidirectional communication state. Thus, the power consumption for maintaining the receiving section in the standby state is reduced as compared to the bidirectional communication state. Therefore, as compared to the case in which the tire condition detection device is maintained in the bidirectional communication state even when information is not transmitted from an external device, the power consumption for maintaining the receiving section in the standby state, in which the receiving section is capable of receiving information from the external device, is reduced. Furthermore, since the receiving section receives signals less frequently in the unidirectional communication state, the power consumption for erroneous reception and the associated operation (for example, transmission) is also reduced. These contents extend the life of the battery.

The above-described tire condition detection device may be configured such that the condition detecting section includes a pressure sensor that detects an air pressure of the tire, and the control section is configured to switch the state of the tire condition detection device from the bidirectional communication state to the unidirectional communication state when a state in which the air pressure detected by the pressure sensor exceeds a low-pressure threshold has continued for a predetermined time or a longer period.

With this configuration, when a state in which the pressure detected by the pressure sensor exceeds the low-pressure threshold continues at least for a predetermined time, the state of the tire condition detection device is switched from the bidirectional communication state to the unidirectional communication state. For example, in a case in the low-pressure threshold is set to 200 kPa, if the tire air pressure exceeds 200 kPa, in other words, if, after the tire condition detection device is attached to a wheel assembly, air pressure is injected into the tire, and the time for completion of inspection (a predetermined time) has elapsed, it is assumed that the inspection at the factory has been completed. In this case, the state of the tire condition detection device is switched to the unidirectional communication state. This reduces the consumption of the power of the battery and extends the life of the battery.

The above-described tire condition detection device may be configured such that the condition detecting section includes a pressure sensor that detects an air pressure of the tire, and the control section switches the state of the tire condition detection device from the unidirectional communication state to the bidirectional communication state when the air pressure detected by the pressure sensor has changed by an amount greater than a change threshold or when the air pressure detected by the pressure sensor becomes lower than or equal to a low-pressure threshold.

This configuration is designed to be used in an inspection at a dealer. Specifically, when the tire condition detection device detects a change in the tire air pressure or a low pressure, in other words, when the operator removes the tire air pressure from the valve, the state of the tire condition detection device is switched to the bidirectional communication state.

### EFFECTS OF THE INVENTION

The present invention extends the life of the battery.

### BRIEF DESCRIPTION OF THE DRAWINGS

Fig. 1 is a schematic diagram of a vehicle equipped with a tire condition monitoring apparatus according to one embodiment.
Fig. 2 is a schematic diagram of a tire condition detection device of the embodiment.
Fig. 3 is a timing diagram showing transmission and reception by the tire condition detection device in the responsive state of the first embodiment.
Fig. 4A is a timing diagram showing transmission by a trigger device.
Fig. 4B is a timing diagram showing transmission and reception by the tire condition detection device when it receives trigger information.
Fig. 5A is a timing diagram showing transmission by a vehicle detection device.
Fig. 5B is a timing diagram showing transmission and reception when a tire condition detection device that is always maintained in a responsive state receives information from an unintended external device.
Fig. 5C is a timing diagram showing transmission and reception when the tire condition detection device of the first embodiment receives information from an unintended external device.
Fig. 6 is a flowchart showing control performed by a tire condition detection device according to a second embodiment.
Fig. 7 is a timing diagram showing transmission and reception by the tire condition detection device in the bidirectional communication state of the second embodiment.
Fig. 8A is a timing diagram showing changes in the air pressure detected by a pressure sensor.
Fig. 8B is a timing diagram showing switching between the unidirectional communication state and the bidirectional communication state of the tire condition detection device of the second embodiment.

### MODES FOR CARRYING OUT THE INVENTION

### First Embodiment

A tire condition detection device according to a first embodiment will now be described.

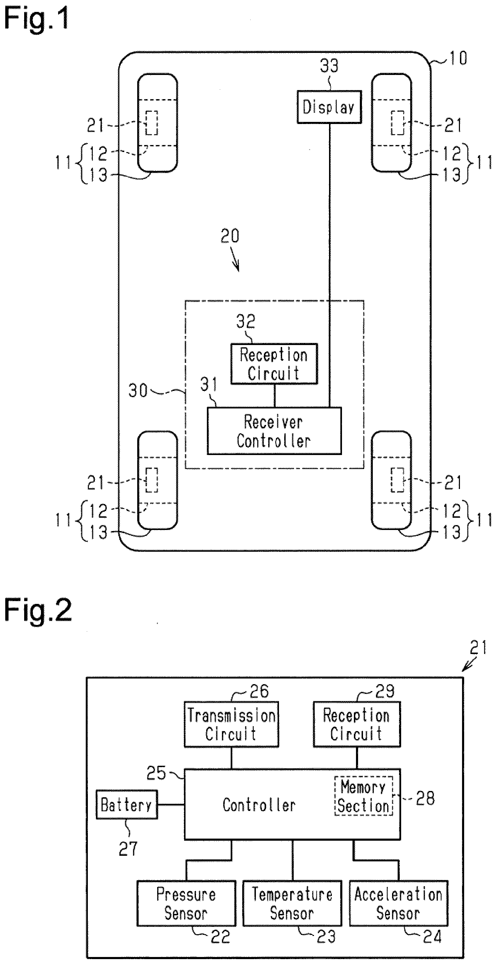

As shown in Fig. 1, a vehicle 10 is equipped with a tire condition monitoring apparatus 20. The tire condition monitoring apparatus 20 includes four tire condition detection devices 21 and a receiver 30. Each tire condition detection device 21 is attached to one of four wheel assemblies 11. The receiver 30 is mounted in the body of the vehicle 10. Each wheel assembly 11 includes a wheel 12 and a tire 13 attached to the wheel 12. Each tire condition detection device 21 is installed so as to be located in the internal space of the tire 13. Each tire condition detection device 21 detects the corresponding tire condition (tire air pressure and the temperature inside the tire) and wirelessly transmits information including data indicating the detected tire condition.

As shown in Fig. 2, each tire condition detection device 21 includes a pressure sensor 22, a temperature sensor 23, an acceleration sensor 24, a controller 25 as a control section, a transmission circuit 26 as a transmitting section, a reception circuit 29 as a receiving section, and a battery 27 serving as a power source for the tire condition detection device 21. The controller 25 is configured to comprehensively control the operation of the tire condition detection device 21. The pressure sensor 22 detects the pressure in the associated tire 13 (tire air pressure). The temperature sensor 23 detects the temperature in the associated tire 13 (tire internal temperature). The acceleration sensor 24 detects acceleration (centrifugal force) acting on itself.

The controller 25 obtains, at an adequate obtainment frequency, the tire pressure detected by the pressure sensor 22, the tire internal temperature detected by the temperature sensor 23, and the acceleration of the tire condition detection device 21 detected by the acceleration sensor 24. The adequate frequency is determined by factors such as the maximum capacity of the battery 27, the desired frequency of monitoring, and the like. In the present embodiment, the pressure sensor 22, the temperature sensor 23, and the acceleration sensor 24 constitute a condition detecting section and are configured to detect the condition of the tire 13.

The controller 25 is configured by circuitry such as a microcomputer, that is, a processor. The controller 25 is configured to perform various kinds of control as will be described below. That is, the controller 25 is programmed to perform various kinds of control. In a memory section 28, an ID code is registered, which is identification information unique to each tire condition detection device 21. The ID code is information used to identify each tire condition detection device 21 at the receiver 30. The controller 25 outputs data containing the tire air pressure data, the tire internal temperature data, and the ID code to the transmission circuit 26. The transmission circuit 26 is configured to wirelessly transmit information including data from the controller 25 via an antenna (not shown).

In the present embodiment, the information transmitted from the transmission circuit 26 is delivered as a radio frequency (RF) signal (for example, 315 MHz band or 434 MHz band signal). Also, in the present embodiment, the information from an external device received by the reception circuit 29 can be received as a low frequency (LF) signal (for example, 125 kHz band signal) via an antenna (not shown).

As an external device that is designed to transmit information to the tire condition detection device 21 (an intended external device) is, for example, a trigger device. A wireless signal transmitted from the external device includes a state switching command, measurement for inspection, responsive transmission command, wireless write command used for software update, wireless write information, and the like.

In addition, the controller 25 determines that the vehicle 10 is traveling when the acceleration (centrifugal force) detected by the acceleration sensor 24 exceeds a travel determination threshold. That is, traveling/stopping of the vehicle 10 is detected based on whether the acceleration detected by the acceleration sensor 24 exceeds the threshold for travel determination. The acceleration acting on the acceleration sensor 24 increases as the speed of the vehicle 10 increases. Thus, in consideration of tolerances and the like, it is possible to determine traveling of the vehicle 10 by setting the travel determination threshold to a value greater than the acceleration detected by the acceleration sensor 24 when the vehicle 10 is in a stopped state.

As shown in Fig. 1, the receiver 30 includes a receiver controller 31 and a reception circuit 32. The receiver controller 31 of the receiver 30 is connected to a display 33. The receiver controller 31 is configured by circuitry such as a microcomputer, that is, a processor. The receiver controller 31 is configured to control the reception circuit 32. That is, the receiver controller 31 is programmed to control the reception circuit 32. The reception circuit 32 receives wireless information from each tire condition detection device 21 via an antenna (not shown). The reception circuit 32 delivers the received information to the receiver controller 31.

Based on the delivered information, the receiver controller 31 obtains the tire condition (the tire air pressure and tire internal temperature) corresponding to the tire condition detection device 21 of the transmission source. The receiver controller 31 causes the display 33 to show information regarding the condition of the tire.

The control of the transmission circuit 26 performed by the controller 25 will now be described. In the following description, a case will be discussed in which trigger information is transmitted from a trigger device, which is an external device, to the tire condition detection device 21 at intended timing. It is assumed that wireless information that is erroneously detected by the tire condition detection device 21 is transmitted from an unintended external device. In the present embodiment, the unintended external device is a vehicle detection device that is installed in a parking lot and capable of detecting entry and exit of vehicles into and out of the parking lot. The vehicle detection device is installed in the vicinity of the entrance/exit of the parking lot and performs wireless transmission for detecting vehicles. The parking lot thus has a function of detecting vehicles.

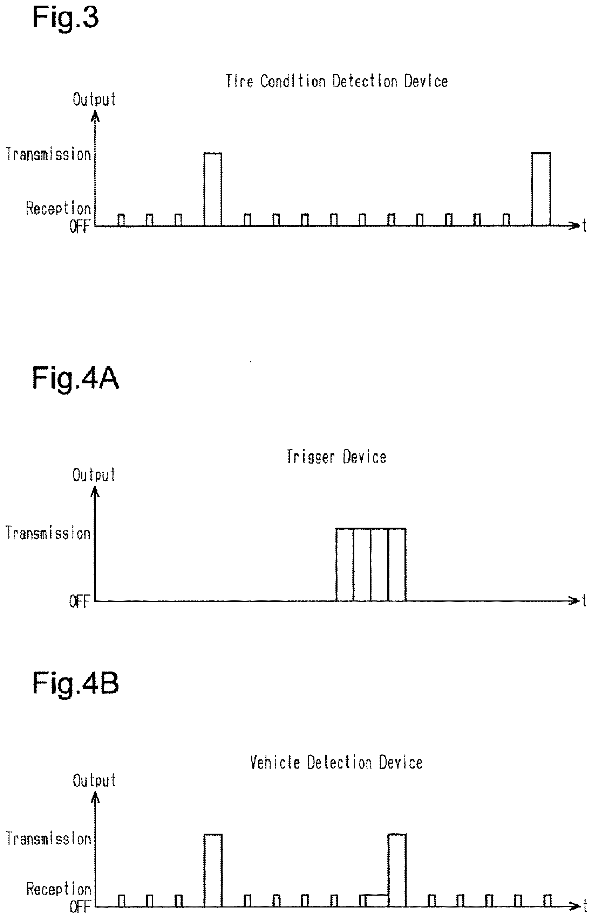

As shown in Fig. 3, the controller 25 of the tire condition detection device 21 causes the transmission circuit 26 to transmit the information on the tire condition detected by the sensors to the receiver 30 at regular time intervals.

The controller 25 of the tire condition detection device 21 is in a standby state for detecting whether information from the external device is transmitted to the tire condition detection device 21 at regular time intervals. In the standby state, the controller 25 detects information from the external device by turning on the reception circuit 29 at regular time intervals so that the information can be received.

Since the reception function of the tire condition detection device 21 is used at inspection and when the tire condition is needed, the frequency of turning on the reception circuit 29 is desired to be as high as possible. In the first embodiment, the LF signal is used, of which the received power is significantly low. This allows the frequency of turning on the reception circuit 29 to be set to a high frequency.

As shown in Fig. 4A, when trigger information is transmitted from the trigger device, the reception circuit 29 in the standby state can receive the trigger information. For example, when the trigger device transmits the trigger information and the reception circuit 29 receives the trigger information as shown in Fig. 4B, the controller 25 responds to this and performs reception response as shown in Fig. 4A. In the present embodiment, the transmission circuit 26 performs responsive transmission as a reception response. This state is referred to as a responsive state, in which the reception circuit 29 is maintained in the standby state and a reception response is performed when trigger information is received. The trigger device does not perform the trigger transmission until it receives a responsive transmission or when it cannot receive a responsive transmission for a certain period of time.

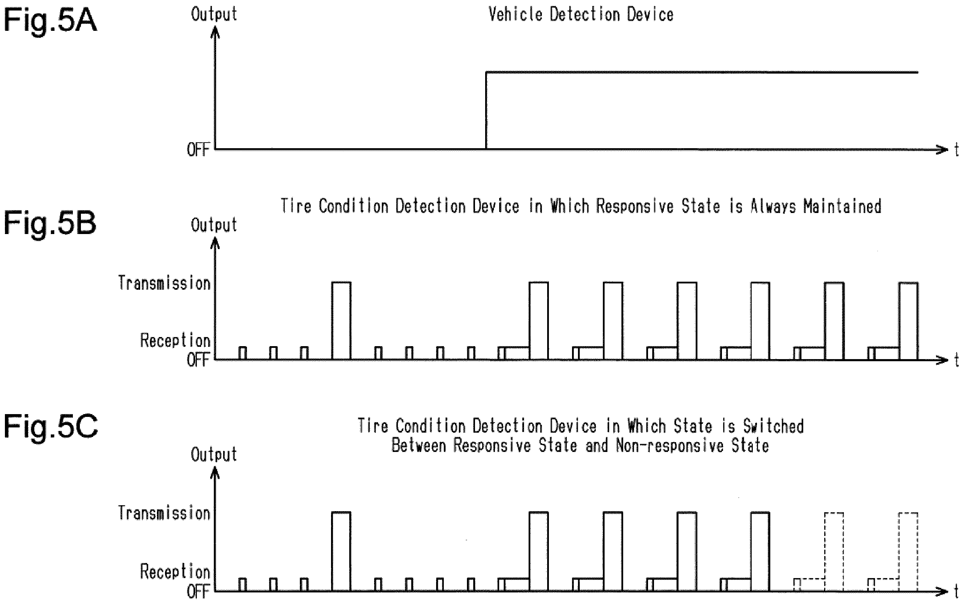

As shown in Fig. 5A, 5B, and 5C, the controller 25 performs responsive transmission even when the reception circuit 29 receives information transmitted from the vehicle detection device. It is now assumed that a tire condition detection device that is always maintained in a responsive state as shown in Fig. 5B is employed. In this case, since the vehicle detection device operates regardless of responsive transmission of the tire condition detection device, the tire condition detection device may continually transmit information. Thus, the tire condition detection device that is always maintained in the responsive state continues to consume power for performing the responsive transmission.

In contrast, in the present embodiment, as shown in Fig. 5C, when the reception circuit 29 continually receives information transmitted from the vehicle detection device (four times in the present embodiment), the controller 25 cancels the standby state of the reception circuit 29 to stop maintaining the standby state. When the reception circuit 29 is not maintained in the standby state, the reception circuit 29 cannot receive wireless transmission from the vehicle detection device, so that no responsive transmission is performed in response to wireless transmission from the vehicle detection device. Therefore, when the reception circuit 29 is not maintained in the standby state, the tire condition detection device 21 is put in a non-responsive state, in which no responsive transmission is performed. In the non-responsive state, responsive transmission is not performed, so it can be said that responsive transmission is harder to perform than in the responsive state. The controller 25 switches the state of the tire condition detection device 21 from the responsive state to the non-responsive state on condition that information from the vehicle detection device is received continually.

For the purpose of illustration, the trigger information transmitted from the trigger device and the information from the external device transmitted from the vehicle detection device are distinguished from each other in Figs. 4 and 5. In reality, however, the controller 25 cannot determine whether the device that transmitted the information is the trigger device or the vehicle detection device. Therefore, even when the reception circuit 29 continually receives the trigger information, the controller 25 switches from the responsive state to the non-responsive state in the same manner.

Switching from the non-responsive state to the responsive state is performed based on the acceleration detected by the acceleration sensor 24. When the acceleration detected by the acceleration sensor 24 exceeds the traveling determination threshold, that is, when the controller 25 determines that the vehicle 10 is traveling, there is no possibility of continually receiving information from the vehicle detection device. In this case, the state of the tire condition detection device 21 is switched from the non-responsive state to the responsive state.

An operation of the tire condition detection device 21 of the present embodiment will now be described.

In the present embodiment, it is assumed that the vehicle 10 is parked in a parking lot having the above-described vehicle detection device for 10 hours and then moved to a dealer, where the tire pressure is inspected. It is also assumed that the tire condition detection device erroneously receives wireless transmission of the vehicle detection device.

First, it is assumed that a tire condition detection device is employed that operates only in the responsive state. When the vehicle 10 arrives at the parking lot and wireless transmission of the vehicle detection device reaches the tire condition detection device, the tire condition detection device starts to erroneously receive the wireless transmission. When receiving the wireless transmission, the tire condition detection device performs responsive transmission. Thus, the tire condition detection device will continually perform erroneous reception and erroneous transmission (responsive transmission) for as long as 10 hours. At this time, since the tire condition detection device continually uses power, the consumption of the power of the battery 27 increases. Then, the vehicle 10 is moved to the dealer. At this time, the battery 27 has consumed power to perform the responsive transmission for 10 hours. Thus, the tire condition detection device will be incapable of wireless transmission to the receiver 30 earlier than predicted with the life of the battery.

Next, it is assumed that a tire condition detection device is employed that can be switched from the responsive state to the non-responsive state. When the vehicle 10 arrives at the parking lot and a wireless signal of the vehicle detection device reaches the tire condition detection device, the tire condition detection device starts to erroneously receive the wireless transmission of the vehicle detection device. When receiving wireless transmission, the tire condition detection device performs responsive transmission. However, when receiving wireless transmission four consecutive times, the tire condition detection device is switched to the non-responsive state and will no longer use the reception function. In this case, the tire condition detection device does not even consume standby power for reception. Thus, the power of the battery 27 is consumed by the amount equivalent to the power that would be consumed if the vehicle did not go to the parking lot with the vehicle detection device (the power to be used for erroneous reception for four times and the power used for erroneous transmission - the reception standby power for 10 hours). Since less power of the battery 27 is consumed, the tire condition detection device can operate normally when the vehicle 10 is moved to the dealer. However, since the tire condition detection device is in the non-responsive state, no response signal is returned when the trigger device is used to inspect the tire pressure at the dealer. The dealer thus cannot inspect the tire pressure.

Next, a case will be discussed in which the tire condition detection device 21 is employed, which can be switched from the responsive state to the non-responsive state and from the non-responsive state to the responsive state. When the vehicle 10 arrives at the parking lot and a wireless signal of the vehicle detection device reaches the tire condition detection device 21, the tire condition detection device 21 starts to erroneously receive the wireless transmission of the vehicle detection device. When receiving wireless transmission, the tire condition detection device 21 performs responsive transmission. However, when receiving wireless transmission four consecutive times, the tire condition detection device 21 is switched to the non-responsive state and will not use the reception function for as long as 10 hours. At this time, the tire condition detection device 21 does not even consume standby power for reception for as long as 10 hours. Thus, the power of the battery 27 is consumed by the amount equivalent to the power that would be consumed if the vehicle did not go to the parking lot with the vehicle detection device (the power to be used for erroneous reception for four times and the power used for erroneous transmission - the reception standby power for 10 hours). Since less power of the battery 27 is consumed, the tire condition detection device 21 can operate normally when the vehicle 10 is moved to the dealer. Also, when moving the vehicle 10 to the dealer, the acceleration detected by the acceleration sensor 24 exceeds the traveling determination threshold and the tire condition detection device is in the responsive state. Thus, when using the trigger device to inspect the tire pressure at the dealer, the response signal is returned and the dealer can inspect the tire pressure.

As described above, the reception function (the reception circuit 29) of the tire condition detection device 21 is mostly used under limited circumstances such as factories and dealers. Moreover, since the vehicle user rarely uses the reception circuit 29, there is little risk of giving a disadvantage to the vehicle user.

The above-described embodiment achieves the following advantages.
(1) When continually receiving information from the same external device, the controller 25 switches the state of the tire condition detection device 21 from the responsive state to the non-responsive state. An external device designed to transmit information to the tire condition detection device 21 (an external device associated with the tire condition detection device 21) stops the transmission of information when receiving responsive transmission. Thus, an external device that continually transmits information can be recognized as an unintended external device. Therefore, when wireless transmission is performed from an unintended external device, the controller 25 switches the state of the tire condition detection device 21 from the responsive state to the non-responsive state. In the non-responsive state, responsive transmission is not performed even if wireless transmission from the external device is received. Therefore, the consumption of the power of the battery 27 is reduced compared to a tire condition detection device that continually performs responsive transmission while receiving wireless transmission from an external device. This extends the life of the battery 27.
(2) The controller 25 switches the state of the tire condition detection device 21 from the non-responsive state to the responsive state when the acceleration detected by the acceleration sensor 24 exceeds the traveling determination threshold. That is, the tire condition detection device 21 is put in the responsive state after the vehicle 10 has traveled. When the vehicle 10 is in a stopped state, erroneous reception of information from an unintended external device continues as long as the vehicle 10 remains in the stopped state. In contrast, when the vehicle 10 is traveling, even if information from an unintended external device is erroneously received, the vehicle 10 is expected to move to a position where the vehicle 10 stops erroneous reception of the information from the unintended device. Therefore, even if the tire condition detection device 21 is switched to the responsive state when the vehicle 10 starts traveling, there is no possibility that the information from the unintended external device will continue to be erroneously received. Therefore, by switching the tire condition detection device 21 to the responsive state at the start of traveling of the vehicle 10, erroneous reception of information from the unintended external device is prevented while the vehicle 10 is in a stopped state. Also, when it is desired to cause the reception circuit 29 to receive information from an external device, the tire condition detection device 21 is in a responsive state.

### Second Embodiment

A tire condition detection device according to a second embodiment will now be described. In the following description, parts that are different from the tire condition detection device of the first embodiment will be described, and the same parts as those of the first embodiment will be denoted by the same reference numerals as those of the first embodiment, and description thereof will be omitted.

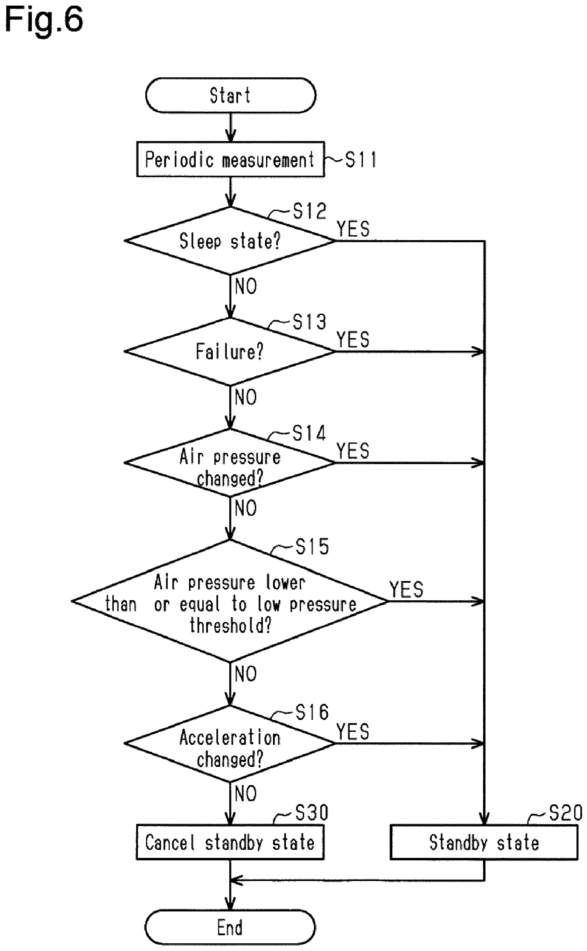

The controller 25 of the tire condition detection device 21 of the present embodiment performs the process shown in Fig. 6 at a predetermined control cycle.

As shown in Fig. 6, the controller 25 performs periodic measurement in step S11. The controller 25 obtains the condition of the tire 13 by periodically acquiring the detection results of the pressure sensor 22, the temperature sensor 23, and the acceleration sensor 24 in the periodic measurement. The controller 25 performs the following processing based on the detection results acquired in the periodic measurement.

In step S12, the controller 25 determines whether the tire condition detection device 21 is in a sleep state. The sleep state refers to a state in which periodic transmission for periodically transmitting data including the tire air pressure data, the tire internal temperature data, and the ID code from the transmission circuit 26 to the reception circuit 29 is not performed. For example, when the tire condition detection device 21 is shipped from the factory that manufactures the tire condition detection device 21, the tire condition detection device 21 is in the sleep state.

If the determination result of step S12 is positive, that is, if the tire condition detection device 21 is in the sleep state, the controller 25 performs the process of step S20. In step S20, the controller 25 maintains the reception circuit 29 of the tire condition detection device 21 in the standby state, in which the reception circuit 29 is capable of receiving wireless transmission from an external device. The standby state is a state in which the transmission circuit 26 performs responsive transmission as a reception response at the reception of wireless transmission. For example, when the tire condition detection device 21 is caused to perform periodic transmission, such as when the tire condition detection device 21 shipped from the factory is attached to the wheel assembly 11, the sleep state is canceled. The sleep state is canceled by transmitting a wake-up command from a trigger device as an external device. In order to receive this wake-up command, the tire condition detection device 21 is maintained in the standby state in the sleep state.

If the determination result of step S12 is negative, that is, if the tire condition detection device 21 is not in the sleep state, the controller 25 performs the process of step S13. In step S13, the controller 25 determines whether each of the members constituting the tire condition detection device 21 has a failure. A "failure" as used in this description includes a state in which the remaining amount of charge of the battery 27 is remarkably low. A failure is determined, for example, when the detection result stops being provided to the controller 25 from the pressure sensor 22, the temperature sensor 23, or the acceleration sensor 24, or when the voltage of the battery 27 is lower than a predetermined voltage threshold.

If the determination result of step S13 is positive, that is, if it is determined that the tire condition detection device 21 has a failure, the controller 25 performs the process of step S20. When the tire condition detection device 21 has a failure, the tire condition monitoring apparatus 20 does not operate normally, and the vehicle user moves the vehicle 10 to the dealer for the purpose of repairing the tire condition detection device 21 or the like. In this case, a trigger device is used at the dealer to transmit a response command in order to confirm the failure of the tire condition detection device 21. In order to receive this response command, the tire condition detection device 21 is maintained in the standby state.

If the determination result of step S13 is negative, that is, if it is determined that the tire condition detection device 21 does not have a failure, the controller 25 performs the process of step S14. In step S14, the controller 25 determines whether the air pressure of the tire 13 has changed. Whether the air pressure of the tire 13 has changed is determined by determining whether the pressure detected by the pressure sensor 22 has changed by an amount greater than a change threshold within a predetermined period. The change threshold is set to a value greater than the value of change in the air pressure, which naturally decreases in a predetermined period due to normal traveling. Therefore, when the air pressure of the tire 13 has changed by an amount greater than the change threshold within the predetermined period, it can be determined that an anomaly has occurred in the tire 13.

If the determination result of step S14 is positive, that is, if the air pressure of the tire 13 has changed, the controller 25 performs the process of step S20. The air pressure of the tire 13 changes when, for example, the tire 13 has gone flat or has been mounted to the wheel 12. In the case in which the tire 13 is assembled to the wheel 12 or in the case in which the flat tire 13 is repaired, a response command is transmitted from the trigger device to check the operation of the tire condition detection device 21 and the air pressure of the tire 13. Thus, in order to receive the response command, the tire condition detection device 21 is maintained in the standby state.

If the determination result of step S14 is negative, that is, if the air pressure of the tire 13 has not changed, the controller 25 performs the process of step S15. In step S15, the controller 25 determines whether the air pressure (absolute pressure) of the tire 13 is lower than or equal to a low-pressure threshold. The low-pressure threshold is set to a value that is at least higher than the atmospheric pressure. For example, the low-pressure threshold is set to 200 kPa (absolute pressure), which is lower than the air pressure of the tire 13 in the use region.

If the determination result of step S15 is positive, that is, if the air pressure of the tire 13 is lower than or equal to the low-pressure threshold, the controller 25 performs the process of step S20. When the air pressure of the tire 13 is lower than or equal to the low-pressure threshold, the tire 13 is being inspected or has gone flat, for example. In these cases, a response command is transmitted from the trigger device for the purpose of inspecting the tire 13 and checking the operation of the tire condition detection device 21. In order to receive this response command, the tire condition detection device 21 is maintained in the standby state.

If the determination result of step S15 is negative, that is, if the air pressure of the tire 13 is higher than the low-pressure threshold, the controller 25 performs the process of step S16. In step S16, the tire condition detection device 21 determines whether the acceleration detected by the acceleration sensor 24 has changed. The acceleration detected by the acceleration sensor 24 changes when, for example, the wheel assembly 11 is replaced or the vehicle 10 is traveling. When replacing the wheel assembly 11, the wheel assembly 11 is placed horizontally so that the axial direction of the wheel assembly 11 is orthogonal to the ground. The acceleration sensor 24 has a plurality of detection axes and detects accelerations in the directions along the respective detection axes. In a state in which the wheel assembly 11 is mounted on the vehicle 10 and a state in which the wheel assembly 11 is placed horizontally, the directions of the detection axes change. Thus, it is possible to determine whether the wheel assembly 11 is being replaced based on the accelerations of the acceleration sensor 24.

If the determination result of step S16 is positive, that is, if the accelerations detected by the acceleration sensor 24 have changed, the controller 25 performs the process of step S20. When the wheel assembly 11 has been replaced, an ID code registration command is transmitted from the trigger device in order to associate the wheel assembly 11 with the receiver 30. In order to receive the ID code registration command, the tire condition detection device 21 is maintained in the standby state. Also, as described in the first embodiment, if the vehicle 10 is traveling, there is a possibility that the vehicle 10 is moving to a dealer. At the dealer, the trigger device is used to transmit a response command in order to check the operation of the tire condition detection device 21 or to inspect the tire 13 in some cases. Therefore, the tire condition detection device 21 is maintained in the standby state.

As described in the first embodiment, whether the vehicle 10 is traveling is determined by utilizing changes in the centrifugal acceleration due to traveling. Whether the wheel assembly 11 has been replaced is determined by utilizing changes in the centrifugal acceleration due to movement of the wheel assembly 11 or changes of the component of the gravitational acceleration due to changes in the directions of the detection axes. Since the manner in which acceleration changes is different between the traveling determination of the vehicle 10 and the replacement determination of the wheel assembly 11, it is also possible to individually perform the traveling determination of the vehicle 10 and the replacement determination of the wheel assembly 11. Therefore, it is possible to maintain the tire condition detection device 21 in the standby state only when the wheel assembly 11 is replaced. It is also possible to maintain the tire condition detection device 21 in the standby state only when the vehicle 10 is traveling.

If the determination result of step S16 is negative, the controller 25 performs the process of step S30. That is, the controller 25 performs the process of step S30 if the determination results of steps S12 to S16 are all negative. In contrast, the controller 25 performs the process of step S20 if at least one of the determination results of steps S12 to S16 is positive.

In step S30, if the tire condition detection device 21 is in the standby state, the controller 25 cancels the standby state. If the standby state has already been canceled, the controller 25 maintains the state in which the standby state is canceled. That is, the tire condition detection device 21 is maintained in the non-responsive state, in which wireless transmission from an external device cannot be received.

The tire condition detection device 21 of the first embodiment switches the state of the tire condition detection device 21 from the responsive state to the non-responsive state when continually receiving information from the same external device. Also, the tire condition detection device 21 switches the state of the tire condition detection device 21 from the non-responsive state to the responsive state when the acceleration detected by the acceleration sensor 24 exceeds the travel determination threshold. Therefore, the tire condition detection device 21 is maintained in the non-responsive state only in an environment in which information from the same external device is continually received.

The tire condition detection device 21 of the present embodiment is switched between the responsive state and the non-responsive state based on the determination results of steps S12 to S16. The determinations in steps S12 to S16 are made to determine whether the tire 13 and the tire condition detection device 21 are in a normal state. When the tire 13 and the tire condition detection device 21 are in a normal state, the tire condition detection device 21 is put in the non-responsive state. The tire condition detection device 21 is put in the responsive state only when the tire 13 and the tire condition detection device 21 are in a state different from the normal state and it is necessary to receive wireless transmission from an external device. Therefore, as compared with the tire condition detection device 21 of the first embodiment, the tire condition detection device 21 of the present embodiment is frequently maintained in the non-responsive state, and the consumption of the power of the battery 27 is easily reduced.

The above-described embodiment achieves the following advantages.
(3) When the determination results of steps S12 to S16 are all negative, the standby state of the tire condition detection device 21 is canceled, so that reception of wireless transmission is not performed. Therefore, the power of the battery 27 is not consumed to receive wireless transmission, which extends the life of the battery 27. If at least one of the determination results of steps S12 to S16 is positive, the tire condition detection device 21 is maintained in the standby state. Therefore, when it is necessary to cause the tire condition detection device 21 to receive wireless transmission, it is possible to maintain the tire condition detection device 21 in the standby state.

### Third Embodiment

A tire condition detection device according to a third embodiment will now be described.

In the third embodiment, the transmission circuit 26 and the reception circuit 29 perform transmission/reception by using Bluetooth® Low Energy (BLE) (2.4 GHz band) as a communication method (communication standard). For the purpose of illustration, the transmission circuit 26 and the reception circuit 29 are described as separate members. However, transmission and reception may be performed by using a transmission/reception circuit in which the transmission circuit 26 and the reception circuit 29 are integrated.

Since the standby power consumption of the BLE is significantly greater than the LF specification, the state of the tire condition detection device 21 is switched to the unidirectional communication state or the bidirectional communication state depending on the time for which the air pressure of the tire 13 has been maintained.

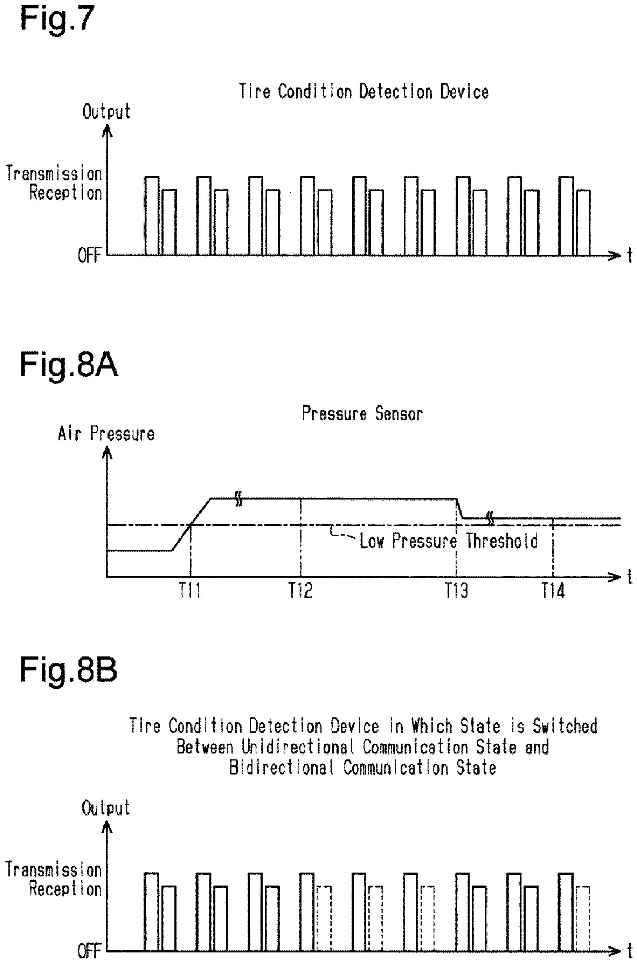

As shown in Fig. 7, the transmission circuit 26 transmits information at regular time intervals as in the first embodiment, and the reception circuit 29 detects information from an external device at regular time intervals. This state is referred to as the bidirectional communication state. In the bidirectional communication state, the reception circuit 29 is maintained in a standby state to be capable of receiving wireless transmission from an external device so as to be able to receive wireless transmission from an external device. Also, in the bidirectional communication state, transmission to the receiver 30 is executed.

As shown in Fig. 8A, when the air pressure of the tire 13 is lower than the low-pressure threshold, the tire condition detection device 21 is maintained in the bidirectional communication state. The low-pressure threshold is set to a value that is at least higher than the atmospheric pressure. For example, the low-pressure threshold is set to 200 kPa (absolute pressure), which is lower than the air pressure of the tire 13 in the use region.

As shown in Figs. 8A and 8B, when air or the like is injected into the tire 13 at a factory or the like, the air pressure of the tire 13 rises and exceeds the low-pressure threshold (at T11 in Fig. 8A). When a predetermined time has elapsed after the air pressure of the tire 13 exceeds the low-pressure threshold (at T12 in Fig. 8A), the tire condition detection device 21 performs only transmission to the receiver 30. This state is referred to as the unidirectional communication state, in which the reception circuit 29 is not maintained in the standby state and unilaterally performs transmission to the receiver 30. The predetermined time is set to be longer than the time required for inspecting the tire 13 with an external device (a trigger device) after injecting air or the like into the tire 13 in a factory or the like. The predetermined time is set to, for example, 10 hours.

When transmitting information from an external device at factories, dealers, or the like at the maintenance or the like the vehicle 10, the air is instantaneously extracted through the tire valve, so that the air pressure of the tire 13 is caused to change by an amount greater than the change threshold (at point in time T13 in Fig. 8A). The change threshold is set to a value greater than the value of change in the air pressure, which naturally decreases due to normal traveling. After the air pressure of the tire 13 has changed by an amount greater than the change threshold at point in time T13, when the time during which the air pressure of the tire 13 is maintained higher than the low-pressure threshold passes a predetermined time (point in time T14 in Fig. 8A), the state of the tire condition detection device 21 is switched to the unidirectional communication state, in which only transmission is performed.

When the air pressure of the tire 13 changes by an amount greater than the change threshold, the controller 25 switches the unidirectional communication state to the bidirectional communication state. Thus, in factories, dealers, and the like, it is possible to cause the tire condition detection device 21 to receive information by instantaneously extracting air through the tire valve and transmitting information from an external device.

A tire condition detection device that is always maintained in the bidirectional communication state repeats transmission and reception at regular time intervals (the state shown in Fig. 6 continues). In contrast, the tire condition detection device 21 is switched from the bidirectional communication state to the unidirectional communication state in response to a change in the air pressure of the tire 13. The thusly configured tire condition detection device 21 performs constant transmission at regular time intervals, but does not perform reception in the unidirectional communication state. This reduces the power consumption for reception and thus extends the life of the battery 27.

The above-described embodiment achieves the following advantages.
(4) The controller 25 is capable of switching the state of the tire condition detection device 21 to the unidirectional communication state or the bidirectional communication state. In the unidirectional communication state, power is not supplied to the reception circuit 29. Thus, even when information from the external device is not transmitted, the consumption of the power of the battery 27 is reduced as compared with the case in which the tire condition detection device 21 is maintained in the bidirectional communication state. This extends the life of the battery 27.

(5) The controller 25 switches the state of the tire condition detection device 21 to the unidirectional communication state or the bidirectional communication state in response to a change in the air pressure of the tire 13. Therefore, it is possible to switch the state of the tire condition detection device 21, which uses BLE as the communication standard, to the unidirectional communication state or the bidirectional communication state. It is at inspection at a factory, a dealer or the like when it is desired to switch the state of the tire condition detection device 21 to the bidirectional communication state. The consumption of the power of the battery 27 is reduced by switching the state of the tire condition detection device 21 to the bidirectional communication state only during inspection at a factory, a dealer, or the like.

The embodiments may be modified as follows.

In the first embodiment and the second embodiment, the reception circuit 29 may be maintained in the standby state when the tire condition detection device 21 is in the non-responsive state. In this case, the reception circuit 29 receives wireless transmission from the vehicle detection device, but the controller 25 performs control so as not to perform responsive transmission even when receiving wireless transmission. Therefore, the non-responsive state may be configured such that reception response is not made regardless of whether the reception circuit 29 is maintained in the standby state.

In the first embodiment, when wireless transmission from an external device is received four consecutive times, the state of the tire condition detection device 21 is switched from the responsive state to the non-responsive state. However, the number of times of consecutive reception at which the state of the tire condition detection device 21 is switched may be set to any number. For example, the responsive state may be switched to the non-responsive state when wireless transmission is received five consecutive times. This number of times is set in consideration of, for example, the number of times of triggering in the factory inspection.

In the first embodiment, when information having a pattern is received and then information from an external device is received multiple times within a predetermined time, the state of the tire condition detection device 21 may be switched from the bidirectional communication state to the unidirectional communication state.

In the first embodiment, when the air pressure detected by the pressure sensor 22 has changed by an amount greater than the change threshold or when the air pressure detected by the pressure sensor 22 becomes lower than or equal to the low-pressure threshold, the state of the tire condition detection device 21 may be switched from non-responsive state to the responsive state. The change threshold and the low-pressure threshold have similar values to the change threshold and the low-pressure threshold in the second and third embodiments.

In each of the above-illustrated embodiment, a communication method different from RF, LF, BLE may be used as the communication method (communication standard).

In each of the above-illustrated embodiment, a sensor different from the temperature sensor 23, the pressure sensor 22, and the acceleration sensor 24 described in the drawings may be used as the condition detecting section. Alternatively, any one of the temperature sensor 23, the pressure sensor 22, and the acceleration sensor 24 may be used.

In each of the above-illustrated embodiment, a sensor other than an acceleration sensor may be used as the sensor for detecting the traveling/stopping of the vehicle 10. For example, a shock sensor, an angular velocity sensor, or a magnetic sensor may be used.

In the first embodiment, the tire condition detection device is switched between the responsive state and the non-responsive state. However, the non-responsive state may be consequently achieved by maintaining the standby state of the reception circuit 29 or reducing the frequency of execution of the response process. For example, the non-responsive state may be achieved by putting the reception circuit 29 in the standby state once every 10 hours. That is, the non-responsive state is not limited to the state in which reception response is not performed, but also includes a state in which reception response is difficult to perform as compared with the responsive state (a state in which the frequency at which reception responses is possible is lower than in the case of the responsive state).

In the third embodiment, the tire condition detection device is switched between the bidirectional communication state and the unidirectional communication state. However, the unidirectional communication state may be consequently achieved by reducing the frequency of the standby state of the reception circuit 29. For example, the reception circuit 29 may be put in the standby state once every 10 hours. That is, the unidirectional communication state is not limited to a state in which the reception circuit 29 is not put in the standby state, but may be any state in which the frequency of setting the reception circuit 29 to the standby state is lower than in the bidirectional communication state.

In the first embodiment, traveling/stopping of the vehicle 10 is detected. Instead, a signal may be transmitted from the vehicle-side when the ignition switch is turned on and the non-responsive state may be switched to the responsive state in response to the reception of that signal.

Although a vehicle detection device is cited as one example of an unintended external device, the present invention is not limited to this. For example, a charging facility or the like for transmitting wireless power for charging electric vehicles may be used.

### DESCRIPTION OF THE REFERENCE NUMERALS

10... Vehicle, 11...Wheel Assembly, 12...Wheel, 13...Tire, 21...Tire Condition Detection Device, 22...Pressure Sensor, 23...Temperature Sensor, 25...Controller, 26...Transmission Circuit, 27...Battery, 29...Reception Circuit, 30...Receiver.

## Claims

1. A tire condition detection device (21) configured to be installed in a tire (13) of each wheel assembly (11) of a vehicle (10), the device comprising:
a condition detecting section (22-24) configured to detect a condition of the tire;
a transmitting section (26) configured to wirelessly transmit information detected by the condition detecting section (22-24);
a receiving section (29) configured to be capable of receiving information wirelessly transmitted from an external device;
a control section (25) configured to control the transmitting section (26) and the receiving section (29); and
a battery (27), which is a power source for the tire condition detection device (21), **wherein**
the control section (25) is configured to be capable of switching a state of the tire condition detection device (21) between
a responsive state, in which the receiving section (29) is maintained in a standby state, in which the receiving section (29) is capable of receiving the information wirelessly transmitted from the external device, wherein the control section (25) performs a reception response when the information is received, and
a non-responsive state, **characterized in that**
the reception response is harder to perform than in the responsive state regardless of whether the receiving section (29) is maintained in the standby state,
the responsive state is a state in which the receiving section is driven intermittently, and
the non-responsive state is a state in which the frequency at which reception responses is possible is lower than in the case of the responsive state.

2. The tire condition detection device (21) according to claim 1, being configured such that, when the receiving section (29) has received the same information from the external device multiple times or when the receiving section (29) has continually received the information from the external device, the control section (25) switches the state of the tire condition detection device (21) from the responsive state to the non-responsive state.

3. The tire condition detection device (21) according to claim 1 or 2, wherein
the condition detecting section (22-24) includes a sensor (24) that detects traveling/stopping of the vehicle (10), and
the control section (25) is configured to switch the state of the tire condition detection device (21) from the non-responsive state to the responsive state when traveling of the vehicle (10) is detected.

4. The tire condition detection device (21) according to claim 1 or 2, wherein
the condition detecting section (22-24) includes a pressure sensor (22) that detects an air pressure of the tire, and
the control section (25) switches the state of the tire condition detection device (21) from the non-responsive state to the responsive state when the air pressure detected by the pressure sensor (22) has changed by an amount greater than a change threshold or when the air pressure detected by the pressure sensor (22) becomes lower than or equal to a low-pressure threshold.

## Patentansprüche

1. Eine Reifenzustandserfassungsvorrichtung (21), welche dazu vorgesehen ist, in einem Reifen (13) einer jeweiligen Radeinheit (11) eines Fahrzeugs (10) angebracht zu werden,
wobei die Vorrichtung aufweist:
- eine Zustandserfassungseinheit (22-24), die dazu vorgesehen ist, einen Zustand des Reifens zu detektieren;
- eine Übermittlungseinheit (26), die dazu vorgesehen ist, von der Zustandserfassungseinheit (22-24) detektierte Informationen drahtlos zu übermitteln;
- eine Empfangseinheit (29), die so eingerichtet ist, dass sie von einem externen Gerät drahtlos übermittelte Informationen empfangen kann,
- eine Steuereinheit (25), die dazu vorgesehen ist, die Übermittlungseinheit (26) und die Empfangseinheit (29) zu steuern; und
- eine Batterie (27), welche als Energiequelle für die Reifenzustandserfassungsvorrichtung (21) dient, wobei
die Steuereinheit (25) so eingerichtet ist, dass sie einen Zustand der Reifenzustandserfassungsvorrichtung (21) umschalten kann zwischen
einem reaktiven Zustand, in dem die Empfangseinheit (29) in einem Standby-Zustand gehalten wird, in welchem die Empfangseinheit (29) die von dem externen Gerät drahtlos übermittelten Informationen empfangen kann, wobei die Steuereinheit (25) eine Empfangsreaktion ausführt, wenn die Informationen empfangen werden, und
einem nicht-reaktiven Zustand, **dadurch gekennzeichnet, dass** die Empfangsreaktion schwerer auszuführen ist als in dem reaktiven Zustand, und zwar unabhängig davon, ob die Empfangseinheit (29) im Standby-Zustand gehalten wird,
der reaktive Zustand ein Zustand ist, in welchem die Empfangseinheit intermittierend betrieben wird, und
der nicht-reaktive Zustand ein Zustand ist, in welchem die Frequenz, bei der Empfangsreaktionen möglich sind, geringer ist als im Falle des reaktiven Zustands.

2. Die Reifenzustandserfassungsvorrichtung (21) nach Anspruch 1,
so eingerichtet, dass, wenn die Empfangseinheit (29) mehrmals die gleiche Information von dem externen Gerät empfangen hat oder wenn die Empfangseinheit (29) die Information von dem externen Gerät ununterbrochen empfangen hat, die Steuereinheit (25) den Zustand der Reifenzustandserfassungsvorrichtung (21) von dem reaktiven Zustand in den nicht-reaktiven Zustand schaltet.

3. Die Reifenzustandserfassungsvorrichtung (21) nach Anspruch 1 oder 2, wobei
die Zustandserfassungseinheit (22-24) einen Sensor (24) aufweist, welcher ein Fahren/Anhalten des Fahrzeugs (10) detektiert, und
die Steuereinheit (25) dazu vorgesehen ist, den Zustand der Reifenzustandserfassungsvorrichtung (21) von dem nicht-reaktiven Zustand in den reaktiven Zustand schaltet, wenn ein Fahren des Fahrzeugs (10) detektiert wird.

4. Die Reifenzustandserfassungsvorrichtung (21) nach Anspruch 1 oder 2, wobei
die Zustandserfassungseinheit (22-24) einen Drucksensor (22) aufweist, welcher einen Luftdruck des Reifens detektiert, und
die Steuereinheit (25) den Zustand der Reifenzustandserfassungsvorrichtung (21) von dem nicht-reaktiven Zustand in den reaktiven Zustand schaltet, wenn der von dem Drucksensor (22) detektierte Luftdruck sich um einen Betrag geändert hat, der größer ist als ein Änderungsschwellenwert, oder wenn der von dem Drucksensor (22) detektierte Luftdruck kleiner oder gleich einem Niederdruck-Schwellenwert wird.

## Revendications

1. Un dispositif de détection d'état de pneu (21) configuré à être installé dans un pneu (13) de chacune des unités roue (11) d'un véhicule (10),
le dispositif (50) comprenant :
- une unité de détection d'état (22-24) configurée à détecter un état du pneu ;
- une unité de transmission (26) configurée à transmettre sans fil des informations détectées par l'unité de détection d'état (22-24) ;
- une unité de réception (29) configurée à être capable de recevoir des informations transmises sans fil d'un appareil externe ;
une unité de commande (25) configurée à commander l'unité de transmission (26) et l'unité de réception (29) ; et
une batterie (27), qui est une source de puissance pour le dispositif de détection de pneu (21), où
l'unité de commande (25) est prévue à être capable de commuter un état du dispositif de détection d'état de pneu (21) entre
- un état réactif, dans lequel l'unité de réception (29) est maintenue dans un état standby, l'unité de réception (29) étant capable dans l'état standby de recevoir les informations transmises sans fil de l'appareil externe, où l'unité de commande (25) exécute une réponse de réception quand l'information est reçue, et
- un état non-réactif, **caractérisé en ce que**
la réponse de réception est plus difficile à exécuter que dans l'état réactif, indépendamment de que l'unité de réception (29) soit maintenue dans l'état standby,
- l'état réactif est un état dans lequel l'unité de réception est opérée de façon intermittente, et
- l'état non-réactif est un état dans lequel la fréquence avec laquelle une réponse de réception est possible est inférieure à une fréquence dans le cas de l'état réactif.

2. Le dispositif de détection d'état de pneu (21) selon la revendication 1,
configuré de telle manière que, si l'unité de réception (29) a reçu plusieurs fois la même information de l'appareil externe ou si l'unité de réception (29) a continument reçu l'information de l'appareil externe, l'unité de commande (25) commute l'état du dispositif de détection d'état de pneu (21) de l'état réactif dans l'état non-réactif.

3. Le dispositif de détection d'état de pneu (21) selon la revendication 1 ou 2,
où
l'unité de détection d'état (22-24) inclut un capteur (24) qui détecte mouvement/arrêt du véhicule (10) et
l'unité de commande (25) est configurée à commuter l'état du dispositif de détection d'état de pneu (21) de l'état non-réactif dans l'état réactif si un mouvement du véhicule (10) est détecté.

4. Le dispositif de détection d'état de pneu (21) selon la revendication 1 ou 2,
où
l'unité de détection d'état (22-24) inclut un capteur de pression (22) qui détecte une pression de l'air du pneu et
l'unité de commande (25) commute l'état du dispositif de détection d'état de pneu (21) de l'état non-réactif dans l'état réactif si la pression de l'air détectée par le capteur de pression (22) a changé par une valeur qui est supérieure à une valeur seuil de changement, ou si la pression de l'air détectée par le capteur de pression (22) devient inférieure ou égale à une valeur seuil de pression basse.
